# EUROPEAN PATENT SPECIFICATION

(11) **EP 1 197 353 B1**
(45) Date of publication and mention of the grant of the patent: **13.07.2005**
(21) Application number: 01102822.2
(22) Date of filing: 12.02.2001
(51) Int. Cl.: B60C 5/00, B60C 5/16, B60C 5/22

(54) **Tire structure**
Reifenstruktur
Structure de pneumatique

(30) Priority: 13.10.2000 DE 20017593 U
(43) Date of publication of application: 17.04.2002
(73) Proprietor: Liu Pin-Chun, Da-Li City, Taichung Hsien, Taiwan R.O.C (TW)
(72) Inventor: Liu Pin-Chun, Da-Li City, Taichung Hsien, Taiwan R.O.C (TW)
(74) Representative: Wehnert, Werner, Dipl.-Ing.

(56) References cited:
- DE-B- 1 024 384
- US-A- 5 109 905

## Description

The present invention relates to a tire that needs no inner tube and a valve is connected to an inner member which is connected to an inside of the lip of the tire.

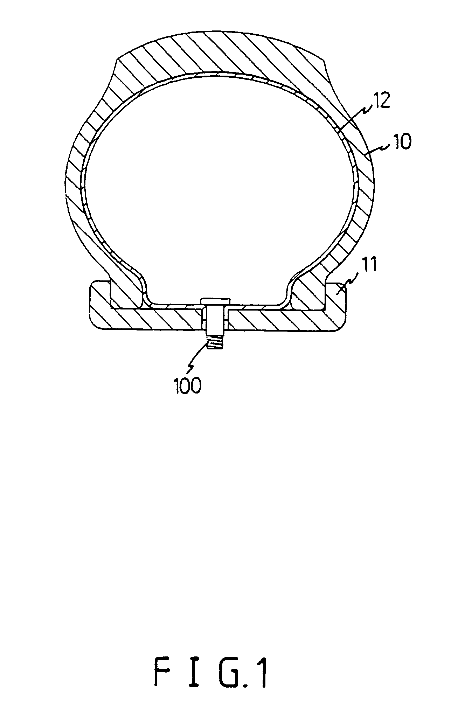

A conventional tire is shown in Fig. 1 and generally includes an outer tire 10, an inner tube 12 which is snugly connected to an inside of the outer tire 10 by pressure. A valve 100 is connected to the inner tube 12 and extends through a hole in the wheel rim 11. Air enters into the inner tube 12 via the valve 100 so that a large pressure is applied to an inside of the inner tube 12 so as to expand the outer tire 10 and a lip portion of the outer tire is engaged with the wheel rim 11. If a sharp object penetrates through the outer tire 10 and the inner tube 12, because the inner tube 12 is so thin so that the inner tube could explode and could hurt people. Furthermore, the manufacturers have to establish two different production lines to produce the inner tube and the outer tire that have different features. The inner tube 12 is difficult to be properly received in the inside of the outer tire 10 when engaging the outer tire 10 with the wheel rim 11.

DE 1 024 384 B discloses a tire structure that has an inner member which is adhered to the inside of the lip of the outer tire and the valve is connected to the inner member so that air pressure is filled between the outer tire and the inner member via the valve. Therefore, the tire needs no inner tube.

The object of the present invention is to provide a tire structure that has an inner member which is adhered to an inside of the lip portions of the outer tire so that air pressure in the tire forces the inner member to lay on the wheel rim and expands the outer tire.

The present invention and further developments and modifications of the invention have been defined in the claims.

These and further objects, features and advantages of the present invention will become more obvious from the following description when taken in connection with the accompanying drawings which show, for purposes of illustration only, several embodiments in accordance with the present invention.

### IN THE DRAWINGS

Fig. 1 is an end cross sectional view to show a conventional tire structure;
Fig. 2 is an end cross sectional view to show a tire structure of the present invention wherein air pressure not yet entered into the space between the inner member and the outer tire, and
Fig. 3 is an end cross sectional view to show air pressure enters into the space between the inner member and the outer tire to expand the outer tire and the inner member is pushed toward the wheel rim.

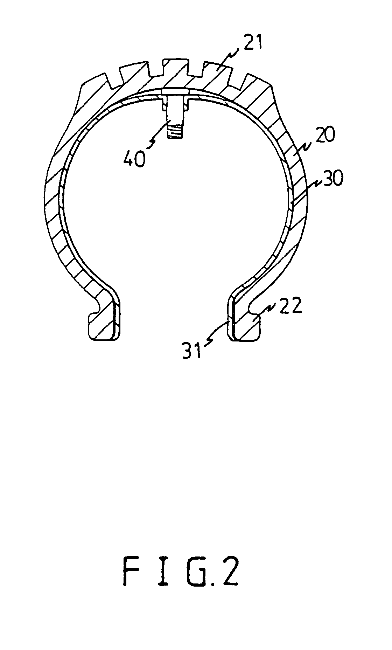

Referring to Fig. 2, the tire structure in accordance with the present invention comprises an outer tire 20 having a lip portion 22 on two peripheral edges of the outer tire 20 and the lip portions 22 are to be engaged with a wheel rim 41. An inner member 30 is located inside of the outer tire 20 and two peripheral edges 31 of the inner member 30 are adhered to an inside of the lip portions 22. Before a sulfurizing process is proceeded to the tire of the present invention, the rest portion of the inner member 30 is applied a layer of agent so that the rest portion of the inner member 30 is not adhered to the inside of the outer tire 20. A valve 40 is connected to the inner member 30 and communicates with a space defined between the outer tire 20 and the inner member 30. The valve 40 is located at a position where has an equal distance to the two peripheral edges 31 of the inner member 30.

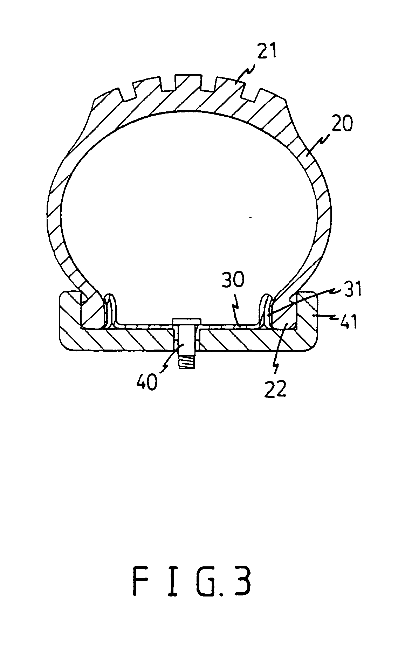

As shown in Fig. 3, when air pressure enters into the space between the outer tire 20 and the inner member 30 via the valve 40 which is inserted through an aperture defined through the wheel rim 41, the outer tire 20 is expanded and the inner member 30 is pressed toward the inside of the wheel rim 41 as shown. Only two peripheral edges 31 of the inner member 30 is securely connected to the inside of the lip portions 22 of the outer tire 20. Accordingly, the tire is a inner-tube-free tire.

## Claims

1. A tire structure comprising:
an outer tire (20) having a lip portion (22) on each of two peripheral edges of said outer tire, said lip portions adapted to be engaged with a wheel rim (41);
an inner member (30) located inside of said outer tire (20) and two peripheral edges (31) of said inner member adhered to an inside of said lip portions (22), and
a valve (40) connected to said inner member and communicating with a space defined between said outer tire (20) and said inner member (30), **characterised in that** the inner member (30) is sized to lie against substantially the whole inside surface of the outer tire (20) when there is no air pressure in the space between the outer tire (20) and the inner member (30).

2. The tire structure as claimed in claim 1, wherein said valve (40) is located at a position where has an equal distance to said two peripheral edges (31) of said inner member (30).

## Patentansprüche

1. Reifenstruktur, die aufweist:
einen äußeren Reifen (20), der einen Lippenabschnitt (22) an jedem von zwei Umfangsrändern des äußeren Reifens hat, wobei die Lippenabschnitte mit einer Radfelge (41) in Eingriffbringbar sind;
ein Innenteil (30), das innerhalb des äußeren Reifens (20) angeordnet ist, wobei zwei Umfangsränder des Innenteils an einer Innenseite der Lippenabschnitte (22) haften; und
ein Ventil (40), das mit dem Innenteil verbunden ist und mit einem zwischen dem äußeren Reifen (20) und dem Innenteil (30) gebildeten Raum in Verbindung steht,
**dadurch gekennzeichnet, dass** das Innenteil (30) so dimensioniert ist, dass es im Wesentlichen an der gesamten Innenfläche des äußeren Reifens (20) anliegt, wenn kein Luftdruck in dem Raum zwischen dem äußeren Reifen (20) und dem Innenteil (30) vorhanden ist.

2. Reifenstruktur nach Anspruch 1, bei der das Ventil (40) an einer Stelle angeordnet ist, an der es einen gleichen Abstand zu den beiden Umfangsrändern (31) des Innenteils (30) hat.

## Revendications

1. Structure de pneu comprenant :
un pneu externe (20) ayant une partie de lèvre (22) sur chacun de deux bords périphériques dudit pneu externe, lesdites parties de lèvre étant adaptées pour être mises en prise avec une jante (41) de roue ;
un élément interne (30) situé à l'intérieur dudit pneu externe (20) et deux bords périphériques (31) dudit élément interne fixés sur un intérieur desdites parties de lèvre (22) ; et
une valve (40) raccordée audit élément interne et communiquant avec un espace défini entre ledit pneu externe (20) et ledit élément interne (30), **caractérisée en ce que** l'élément interne (30) est dimensionné pour se trouver sensiblement contre la totalité de la surface interne du pneu externe (20) lorsqu'il n'y a pas de pression d'air dans l'espace situé entre le pneu externe (20) et l'élément interne (30).

2. Structure de pneu selon la revendication 1, dans laquelle ladite valve (40) est située à une position où elle est à égale distance desdits deux bords périphériques (31) dudit élément interne (30).
